# EUROPÄISCHE PATENTANMELDUNG

(11) **EP 2 151 295 A1**
(43) Veröffentlichungstag der Anmeldung: **10.02.2010**
(21) Anmeldenummer: 09005959.3
(22) Anmeldetag: 30.04.2009
(51) Int. Cl.: B23K 9/20, B23K 37/02, G01M 13/00, G01M 19/00, B25J 19/00

(54) **Schweißkopfprüfstand zum Überprüfen eines Schweisskopfes eines Schweissroboters**

(30) Priorität: 06.08.2008 DE 102008036622
(71) Anmelder: Dr. Ing. h.c. F. Porsche Aktiengesellschaft, 70435 Stuttgart (DE)
(72) Erfinder: Liebendoerfer, Klaus, 75417 Muehlacker (DE); Kueffel, Peter, 71691 Freiberg (DE); Solisch, Heinz, 70376 Stuttgart (DE); Meyer, Uwe-Ralph, 71672 Marbach am Neckar (DE)

(57) **Zusammenfassung**

Die Erfindung betrifft einen Prüfstand (1) zum Überprüfen eines Schweißkopfs (2) eines Schweißroboters, mit einer Kopfhalterung (4) zum Befestigen eines vom Schweißroboter entfernten, zu überprüfenden Schweißkopfs (2) und einer Steuerungsanordnung (17,18) zum Betätigen des Schweißkopfs (2) zur Durchführung von Schweißvorgängen.

## Beschreibung

Die vorliegende Erfindung betrifft einen Prüfstand zum Überprüfen eines Bolzenschweißkopfs und der zugehörigen Schweißkopfsteuerung eines Schweißroboters.

Bei der Serienfertigung größerer Produkte, wie zum Beispiel eine Serienfertigung von Kraftfahrzeugen, kommen Schweißroboter zum Einsatz. Ein derartiger Schweißroboter kann an einem beweglichen Arm unterschiedliche Werkzeuge andocken. Beispielsweise kann eine Schweißzange, ein Greifer oder ein Schweißkopf zum Bolzenschweißen angedockt werden. Im Betrieb können sich die Bolzenschweißköpfe abnutzen. Insbesondere besitzen sie verschleißanfällige Komponenten, die im Rahmen von Wartungsintervallen ausgetauscht werden. Es hat sich gezeigt, dass ein erneuerter Schweißkopf bei seiner erneuten Verwendung im Schweißroboter nicht zwangsläufig in der gewünschten Weise funktioniert, sondern fehlerhaft arbeiten kann. Beispielsweise können Betriebsparameter des Schweißkopfs von denjenigen Betriebsparametern signifikant abweichen, die der Schweißroboter für den Schweißkopf bereithält. Ein fehlerhafter Schweißkopf führt zu Produktionsstillstand, was erhebliche Kosten verursachen kann.

Die vorliegende Erfindung beschäftigt sich mit dem Problem, für eine Schweißanlage einen Weg aufzuzeigen, der zu weniger Ausfallzeiten führt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Prüfstand zum Überprüfen eines Schweißkopfs eines Schweißroboters bereitzustellen, mit dessen Hilfe reale Schweißvorgänge durchführbar sind, um Betriebsparameter des Schweißkopfs überprüfen und ggf. einstellen zu können. Mit Hilfe eines derartigen Prüfstands kann somit die Funktionalität des Schweißkopfs außerhalb der Serienproduktion geprüft und ggf. justiert werden. Hierdurch wird erreicht, dass der Schweißkopf, wenn er dann am Schweißroboter zum Einsatz kommt, tatsächlich ordnungsgemäß funktioniert. Die Gefahr von Stillstandszeiten und Produktionsausfall beim Einbauen eines neuen Schweißkopfs bzw. beim Austauschen eines Schweißkopfs wird dadurch erheblich reduziert.

Besonders vorteilhaft ist dabei eine Ausführungsform, bei welcher eine Kopfhalterung des Prüfstands, die zum Befestigen des Schweißkopfs dient, Halterungsanschlüsse für Versorgungsleitungen aufweist, die komplementär zu am Schweißkopf ausgebildeten Kopfanschlüssen ausgestaltet sind, die ihrerseits komplementär zu am Schweißroboter ausgebildeten Roboteranschlüssen ausgestaltet sind. Mit anderen Worten, die Kopfhalterung besitzt im Wesentlichen die gleiche Schnittstelle wie der Roboter, so dass die volle Funktionalität des Schweißkopfs überprüfbar ist.

Entsprechend einer besonders vorteilhaften Ausführungsform kann der Prüfstand mit einer Werkstückhalterung zum Befestigen eines Werkstücks ausgestattet sein, die eine Stelleinrichtung zum Bewegen des Werkstücks relativ zum Schweißkopf aufweist. Hierdurch ist es mit Hilfe des Prüfstands möglich, eine Serie von reellen Schweißvorgängen im Prüfstand durchzuführen, um so den Serienbetrieb des Schweißkopfs überprüfen zu können.

Gemäß einer vorteilhaften Ausführungsform kann eine Steuerungsanordnung des Prüfstands einerseits eine Schweißkopfsteuerung zum Betreiben des Schweißkopfs und andererseits eine damit verbundene Prüfstandssteuerung zum Betätigen der Schweißkopfsteuerung umfassen. Durch diese Aufspaltung der Steuerungsanordnung in eine auf die Belange des Schweißkopfs adaptierte Schweißkopfsteuerung und eine auf die Anforderungen des Prüfstands adaptierte Prüfstandssteuerung lässt sich eine erhebliche Vereinfachung schaffen. Insbesondere ist es dadurch möglich, als Schweißkopfsteuerung eine Steuerung zu verwenden, die grundsätzlich auch beim Betrieb des Schweißkopfs an einem Schweißroboter zum Einsatz kommen könnte. Diese Schweißkopfsteuerung enthält somit alle für das ordnungsgemäße Betreiben des Schweißkopfs erforderlichen Parameter. Insbesondere kann diese Schweißkopfsteuerung ohne weiteres vom Hersteller des Schweißkopfs bereitgestellt werden. Im Unterschied dazu kann die Prüfstandssteuerung ohne weiteres so individuell gestaltet werden, dass damit die an den Prüfstand gestellten Anforderungen erfüllt werden können. Insbesondere lassen sich unterschiedliche Prüfprogramme automatisch durchführen. Des Weiteren kann die Prüfstandssteuerung beispielsweise auch den vorstehend genannten Stellantrieb zum Verstellen der Werkstückhalterung betätigen.

Die Prüfstandssteuerung simuliert quasi einen Schweißablauf, der im Normalbetrieb durch den Schweißroboter bzw. durch eine an die Belange des Schweißroboters adaptierte Robotersteuerung ausgelöst wird. Die Betriebsparameter für den Schweißkopf sind dagegen in der Schweißkopfsteuerung abgelegt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung eines Prüfstands,
- Fig. 2: eine stark vereinfachte schaltplanartige Prinzipdarstellung einer Schweißanlage.

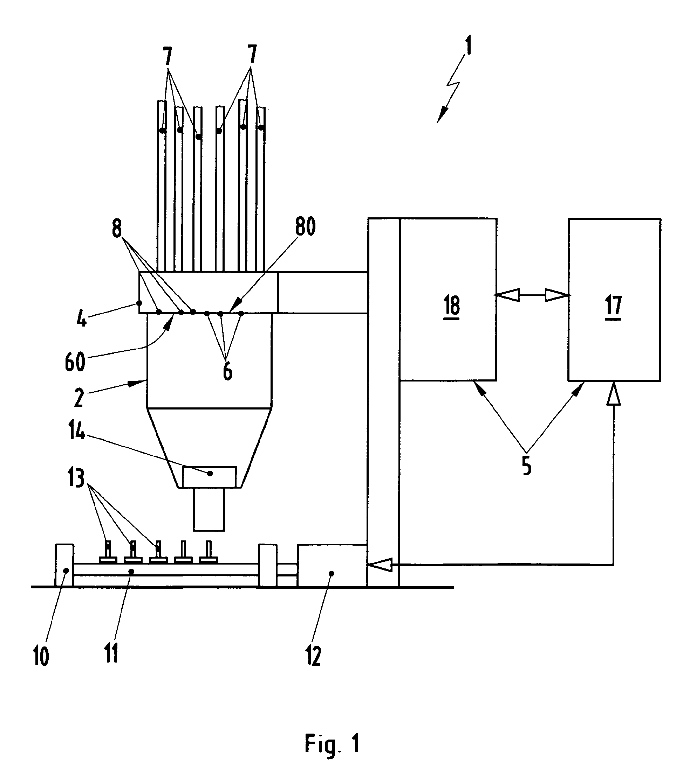

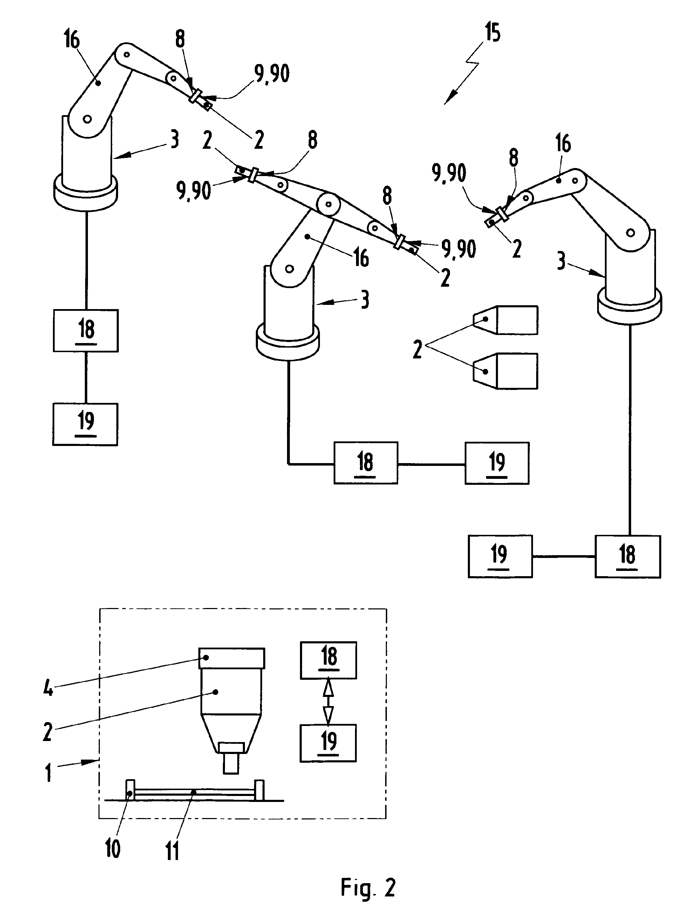

Entsprechend Fig. 1 weist ein Prüfstand 1, der zum Überprüfen eines Schweißkopfs 2 eines in Fig. 2 erkennbaren Schweißroboters 3 dient, eine Kopfhalterung 4 auf, an welcher der zu überprüfende Schweißkopf 2 befestigt werden kann. Dabei ist der Schweißkopf 2 vom Schweißroboter 3 entfernt. Die Überprüfung des Schweißkopfs 2 kann somit außerhalb einer Produktionslinie und somit ohne Unterbrechung der Produktion stattfinden. Der Prüfstand 1 weist außerdem eine Steuerungsanordnung 5 auf, mit deren Hilfe der an der Kopfhalterung 4 angebrachte Schweißkopf 2 betätigbar ist. Dabei kann die Steuerungsanordnung 5 den Schweißkopf 2 zum Durchführen von Schweißvorgängen ansteuern.

Entsprechend einer bevorzugten Ausführungsform umfasst die Steuerungsanordnung 5 zumindest zwei separate Steuerungen, nämlich zum einen eine Prüfstandssteuerung 17 sowie eine Schweißkopfsteuerung 18. Dabei können die beiden Steuerungen 17, 18 in separaten Steuergeräten oder Steuerschränken bzw. Schaltschränken angeordnet sein. Die Schweißkopfsteuerung 18 dient zum Betreiben des Schweißkopfs 2. Die Schweißkopfsteuerung 18 enthält hierzu insbesondere alle zum Betreiben des Schweißkopfs 2 erforderlichen Parameter. Sie ist speziell an den jeweiligen Schweißkopf 2 adaptiert. Im Unterschied dazu dient die Prüfstandssteuerung 17 zum Betätigen der Schweißkopfsteuerung 18, um mit Hilfe der Prüfstandssteuerung 17 den im Prüfstand 1 angeordneten, an der Kopfhalterung 4 angebrachten Schweißkopf 2 über die Schweißkopfsteuerung 18 betreiben zu können. Die Prüfstandssteuerung 17 ist speziell an den Prüfstand 1 adaptiert. Die beiden Steuerungen 17, 18 kommunizieren auf geeignete Weise, was hier durch einen nicht näher bezeichneten Doppelpfeil angedeutet ist. Die Prüfstandssteuerung 17 kann beispielsweise unterschiedliche Schweißprogramme, die in der Schweißkopfsteuerung 18 hinterlegt sind, auswählen und zur Durchführung aktivieren. Ferner können auch von der Schweißkopfsteuerung 18 generierte Signale, quasi als Rückmeldung von der Prüfstandssteuerung 17 empfangen und ausgewertet werden.

Die Kopfhalterung 4 weist ein bewegliches Schlauchpaket 60 mit allen notwendigen Leitungen auf. Über Versorgungsleitungen 7 kann der Schweißkopf 2 bspw. mit Schweißhilfsstoffen, Elektrizität, Pneumatik und dergleichen versorgt werden. Das bewegliche Schlauchpaket 60 ist dabei genauso aufgebaut wie Schweißkopf 2. Dieses Schlauchpaket 60 wirkt mit einem Schlauchpaket 80 zusammen, wobei zu Halterungsanschlüssen 6 komplementäre Kopfanschlüsse 8 vorhanden sind. Dementsprechend kann die Steuerungsanordnung 5 so ausgestaltet sein, dass im Prüfstand 1 alle erforderlichen Funktionen des Schweißkopfs 2 überprüft werden können, welche der Schweißkopf 2 im Betrieb mit dem Schweißroboter 3 erfüllen muss.

Der Prüfstand 1 ist bei der hier gezeigten bevorzugten Ausführungsform außerdem mit einer Werkstückhalterung 10 ausgestattet, mit deren Hilfe ein Werkstück 11 im Prüfstand 1 befestigt bzw. festgehalten werden kann. Ferner ist eine Stelleinrichtung 12 vorgesehen, die mit der Steuerungsanordnung 5 gekoppelt ist und die mit Hilfe der Steuerungsanordnung 5 betätigt werden kann. Im Einzelnen ist die Stelleinrichtung 12 zu ihrer Betätigung mit der Prüfstandsteuerung 17 gekoppelt. Die Stelleinrichtung 12 ist außerdem mit der Werkstückhalterung 10 antriebsgekoppelt und ermöglicht Relativbewegungen zwischen dem Werkstück 11 und dem Schweißkopf 2. Entsprechend einer besonders vorteilhaften Ausführungsform kann nun die Steuerungsanordnung 5 bzw. die Prüfstandsteuerung 17 so ausgestaltet bzw. programmiert sein, dass damit automatisch eine Abfolge mehrerer Schweißvorgänge am Werkstück 11 in Relativlagen zwischen Werkstück 11 und Schweißkopf 2 durchführbar sind. Im dargestellten Beispiel handelt es sich beim Schweißkopf 2 um einen Bolzenschweißkopf 2, mit dessen Hilfe Schweißbolzen 13 am Werkstück 11 angebracht werden können.

Gemäß einer vorteilhaften Ausführungsform kann die Steuerungsanordnung 5 zum Adaptieren eines Messsystems 14 des Schweißkopfs 2 ausgestaltet sein. Das Messsystem 14 ist dabei fest in den Schweißkopf 2 eingebaut. Hierzu kommuniziert die Prüfstandsteuerung 17 über die Schweißkopfsteuerung 18 mit dem Messsystem 14. Beispielsweise können mit Hilfe des jeweiligen Schweißkopfs 2 unterschiedlich lange und unterschiedlich dicke Schweißbolzen 13 verarbeitet werden. Um dies ordnungsgemäß durchführen zu können, muss der Schweißkopf 2 den jeweiligen Bolzen 13 eindeutig identifizieren können und richtig positionieren können. Da bspw. jeder Fahrzeughersteller andere Schweißbolzen bevorzugt und auch unterschiedliche Schweißbolzen beim gleichen Fahrzeughersteller zur Anwendung kommen können, während die Schweißköpfe baugleich zum Einsatz kommen können, ist eine individuelle Adaption an die Bedürfnisse des jeweiligen Fahrzeugherstellers erforderlich. Diese Adaption kann im Prüfstand 1 mit Hilfe der Steuerungsanordnung 5 einfach realisiert werden bzw. überprüft werden.

Schweißparameter, die beim Betreiben des Schweißkopfs 2 eingestellt werden müssen, sind beispielsweise Strombedarf, Spannungspegel zum Ansteuern unterschiedlicher Funktionen und dgl. mehr. Diese Schweißparameter sind in der Schweißkopfsteuerung 18 hinterlegt. Die Prüfstandssteuerung 17 kann nun unterschiedliche Schweißprogramme auswählen, die in der Schweißkopfsteuerung 18 hinterlegt sind. Diese Schweißprogramme sind beispielsweise hinsichtlich der unterschiedlichen Schweißbolzentypen individualisiert.

Entsprechend Fig. 2 umfasst eine Schweißanlage 15, wie sie bspw. bei der Serienfertigung von Fahrzeugen zur Anwendung kommen kann, mehrere Schweißroboter 3 auf. Diese Schweißroboter 3 weisen jeweils an einem Roboterarm 16 jeweils mindestens einen solchen Schweißkopf 2 auf, der hierzu als Wechselkopf ausgestaltet ist.

Für die Schweißanlage 15 ist ein Prüfstand 1 in beispielsweise einem separaten Raum der zuvor beschriebenen Art vorgesehen, mit dem die Schweißköpfe 2 überprüft werden können. Dabei kann einem einzelnen Schweißroboter 3 auch eine Gruppe von austauschbaren Schweißköpfen 2 zugeordnet sein. Ferner weist die Schweißanlage 15 für jeden Schweißroboter 3 eine Schweißkopfsteuerung 18 sowie eine Robotersteuerung 19 auf. Die Schweißkopfsteuerung 18 dient wie im Prüfstand 1 zum Betreiben des Schweißkopfs 2. Die Robotersteuerung 19 dient zum Ansteuern der Schweißkopfsteuerung 18, um somit den am jeweiligen Schweißroboter 3 montierten Schweißkopf 2 indirekt über die jeweilige Schweißkopfsteuerung 18 betätigen zu können. Dabei kann insbesondere vorgesehen sein, dass die Schweißsteuerungen 18, die dem jeweiligen Roboter 3 zugeordnet sind, baugleich zur Schweißkopfsteuerung 18 des Prüfstands 1 sind.

Erkennbar ist der Prüfstand 1 separat zur Gruppe der Schweißroboter 3 gestaltet. Mit Hilfe des Prüfstands 1 werden insbesondere mechanische Parameter des jeweiligen Schweißkopfs 2 ermittelt und ggf. eingestellt. Elektrische Parameter werden dabei vorzugsweise nur kontrolliert. Ferner wird ein Funktionstest des jeweiligen Schweißkopfs 2 durchgeführt. Die Überprüfung der Parameter des Schweißkopfs 2 erfolgt dabei im Rahmen eines Soll-Ist-Abgleichs.

Mit Hilfe der Überprüfung und ggf. Justierung der Schweißköpfe 2 im Prüfstand 1 ist der jeweilige überprüfte Schweißkopf 2 sofort ordnungsgemäß in der Schweißstation 15 betriebsbereit, wenn er an einem der Schweißroboter 3 montiert wird. Zusätzliche individuelle Einstellungen des Schweißroboters zur Adaption des daran angebrachten Schweißkopfs 2 können dann entfallen. Der Produktionsausfall kann dadurch ebenfalls reduziert werden.

## Patentansprüche

1. Prüfstand zum Überprüfen eines Schweißkopfs (2) eines Schweißroboters (3),
- mit einer Kopfhalterung (4) zum Befestigen eines vom Schweißroboter (3) entfernten, zu überprüfenden Schweißkopfs (2),
- mit einer Steuerungsanordnung (5) zum Betätigen des Schweißkopfs (2) zur Durchführung von Schweißvorgängen.

2. Prüfstand nach Anspruch 1,
**dadurch gekennzeichnet,**
**dass** die Kopfhalterung (4) Halterungsanschlüsse (6) für Versorgungsleitungen (7) aufweist, die komplementär zu am Schweißkopf (2) ausgebildeten Kopfanschlüssen (8) ausgestaltet sind, die ihrerseits komplementär zu am Schweißroboter (3) ausgebildeten Roboteranschlüssen (9) ausgestaltet sind.

3. Prüfstand nach Anspruch 1 oder 2,
**dadurch gekennzeichnet,**
**dass** eine Werkstückhalterung (10) zum Befestigen eines Werkstücks (11) vorgesehen ist, die eine mit der Steuerungsanordnung (5) gekoppelte und damit betätigbare Stelleinrichtung (12) zum Bewegen des Werkstücks (11) relativ zum Schweißkopf (2) aufweist.

4. Prüfstand nach Anspruch 3,
**dadurch gekennzeichnet,**
**dass** die Steuerungsanordnung (5) zum Durchführen einer Abfolge mehrerer Schweißvorgänge am Werkstück (11) in verschiedenen Relativlagen zwischen Werkstück (11) und Schweißkopf (2) ausgestaltet ist.

5. Prüfstand nach einem der Ansprüche 1 bis 4,
**dadurch gekennzeichnet,**
**dass** der Schweißkopf als Bolzenschweißkopf (2) ausgestaltet ist.

6. Prüfstand nach einem der Ansprüche 1 bis 5,
**dadurch gekennzeichnet,**
**dass** die Steuerungsanordnung (5) eine Schweißkopfsteuerung (18) zum Betreiben des Schweißkopfs (2) sowie eine damit verbundene Prüfstandsteuerung (17) zum Betätigen der Schweißkopfsteuerung (18) bei an der Kopfhalterung (4) montiertem Schweißkopf (2) aufweist.

7. Prüfstand nach Anspruch 6,
**dadurch gekennzeichnet,**
**dass** die Prüfstandsteuerung (17) zum Betätigen der Stelleeinrichtung (12) und/oder zum Auswerten von Signalen der Schweißkopfsteuerung (18) ausgestaltet ist.
